(19) Europäisches Patentamt / European Patent Office / Office européen des brevets

(11) **EP 2 002 577 B1**

(12) **FASCICULE DE BREVET EUROPEEN**

(45) Date de publication et mention
de la délivrance du brevet:
**13.03.2013 Bulletin 2013/11**

(21) Numéro de dépôt: **07704208.3**

(22) Date de dépôt: **29.01.2007**

(51) Int Cl.:
***H04B 17/00*** (2006.01)   ***H04B 1/38*** (2006.01)

(86) Numéro de dépôt international:
**PCT/EP2007/050854**

(87) Numéro de publication internationale:
**WO 2007/113026 (11.10.2007 Gazette 2007/41)**

(54) **Procédé d'initialisation d'un module électronique de radiocommunication, procédé de compression et de décompression de paramètres de calibrage, produit programme d'ordinateur et moyen de stockage correspondants**

Verfahren zum Initialisieren eines elektronischen Funkkommunikationsmoduls, Verfahren zum Komprimieren und Dekomprimieren von Kalibrationsparametern, entsprechendes Computerprogrammprodukt und Speichermittel

Method of initialising an electronic radio communication module, method of compressing and decompressing calibration parameters, corresponding computer programme product and storage means

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.04.2006 FR 0603064**

(43) Date de publication de la demande:
**17.12.2008 Bulletin 2008/51**

(73) Titulaire: **Wavecom**
**92442 Issy-les-Moulineaux Cedex (FR)**

(72) Inventeurs:
• **VIAUD, Sylvain**
**F-92442 Issy Les Moulineaux Cedex (FR)**

• **GIRAULT, Laurent**
**F-92442 Issy Les Moulineaux Cedex (FR)**

(74) Mandataire: **Guéné, Patrick**
**Cabinet Vidon,**
**16B, rue de Jouanet,**
**BP 90333**
**35703 Rennes Cedex 7 (FR)**

(56) Documents cités:
**WO-A-01/84741         US-A- 4 746 879**
**US-A1- 2005 221 764**

**Description**

**1. DOMAINE DE L'INVENTION**

Le domaine de l'invention est celui des radiocommunications, et plus précisément des terminaux de radiocommunication numériques, qu'il s'agisse de radiotéléphones ou de dispositifs ou moyens de tous types capables d'échanger des signaux à l'aide d'un système de radiocommunication, implantés par exemple dans des machines ou des véhicules.
L'invention concerne plus particulièrement l'initialisation d'un module électronique de radiocommunication.

**2. ART ANTÉRIEUR**

2.1 Module de radiocommunication

Actuellement, la fabrication de dispositifs de radiocommunication est un sujet de recherche important. En effet, on vise au moins trois objectifs difficiles à concilier : miniaturiser les dispositifs, augmenter et adapter les fonctionnalités, et simplifier le montage.
Pour garantir une intégration optimale le titulaire de la présente demande de brevet a proposé une approche consistant à regrouper dans un module unique (appelé module électronique de radiocommunication), tout ou au moins la plupart des fonctions d'un dispositif de radiocommunication numérique.
Un tel module se présente sous la forme d'un boîtier unique, préférentiellement blindé, que les fabricants de dispositifs peuvent implanter directement, sans devoir prendre en compte une multitude de composants.
Ce module (encore appelé parfois « macro composant ») est en effet formé d'un regroupement de plusieurs composants sur un substrat, de façon à être implanté sous la forme d'un unique élément. Il comprend les composants (notamment un processeur et des mémoires (une mémoire volatile et une mémoire non volatile) et les logiciels essentiels nécessaires au fonctionnement d'un dispositif de radiocommunication (aussi appelé terminal de radiocommunication ou encore terminal sans-fil) utilisant des fréquences radioélectriques.
Un tel module permet donc d'intégrer facilement, rapidement et de façon optimisée l'ensemble des composants dans des terminaux sans-fil (téléphones portables, modems, ou tout autre dispositif exploitant un standard sans fil).
Ainsi, les modules diffusés par le titulaire de la présente demande de brevet sont entièrement testés tant sur le plan matériel (« hardware ») que logiciel (« software ») sur la plupart des réseaux sur lesquels ils pourront être utilisés ensuite. En outre, le module englobe avantageusement les aspects de propriété intellectuelle (ou IPRs, pour « Intellectual Property Rights ») (toutes les fonctions ont été regroupées, c'est le fabricant du module qui gère les aspects de droits de propriété industrielle correspondants) et d'assistance technique.

2.2 Inconvénients de l'état de l'art

D'une façon générale, les modules électroniques de radiocommunication sont initialisés avec des paramètres de calibration (aussi appelés par la suite paramètres de calibrage), avant utilisation.
Ceci est notamment dû au fait qu'ils embarquent une partie matérielle faisant appel à de l'électronique analogique. En effet, la forte dispersion des paramètres électriques de cette partie matérielle nécessite des compensations logicielles par l'utilisation de paramètres dont la valeur est fixée à l'issue d'un processus de calibration, lors de la production (en usine) du module de radiocommunication.
Cependant, cette technique de calibrage connue présente l'inconvénient de nécessiter une mémoire non volatile (par exemple de type « flash ») de capacité importante, et donc coûteuse et encombrante, pour stocker les paramètres de compensation précités. En effet, l'espace mémoire utilisé par les paramètres de calibration de la partie matérielle du module de radiocommunication est non négligeable (environ 8 Kbits sont nécessaire dans l'état de la technique).
Les contraintes d'intégration de ces modules de radiocommunication augmentent régulièrement. Il existe donc un besoin d'optimisation du stockage des paramètres de calibration de la partie matérielle du module de radiocommunication, notamment pour la mise en oeuvre d'un module de radiocommunication dépourvu de mémoire non volatile de forte capacité.

**3. OBJECTIFS DE L'INVENTION**

L'invention, dans au moins un mode de réalisation, a notamment pour objectif de pallier ces différents inconvénients de l'état de la technique.
Plus précisément, l'un des objectifs de la présente invention, dans au moins un mode de réalisation, est de fournir une technique permettant d'initialiser un module de radiocommunication sans devoir utiliser de paramètres de calibration coûteux, notamment en terme de mémoire.

Un autre objectif de la présente invention, dans au moins un mode de réalisation, est de fournir une technique de compression de paramètres de calibration qui soit simple à mettre en oeuvre et efficace, notamment en terme de réduction de la taille de l'espace de stockage à utiliser.

L'invention a encore pour objectif de proposer une telle technique de compression qui, dans au moins un mode de réalisation, soit notamment bien adaptée à l'utilisation d'une mémoire non volatile de taille réduite (de l'ordre de quelques centaines de bits), par exemple de type fusible (destinée à l'origine à recevoir un numéro de série).

Un autre objectif de l'invention est de fournir une technique de décompression qui soit simple à mettre en oeuvre et efficace, notamment en terme de rapidité de restauration de paramètres de calibration.

Un objectif complémentaire de l'invention, dans au moins un mode de réalisation, est de fournir une technique permettant au fournisseur du module de radiocommunication de continuer à assurer à son client que le module est certifié, calibré et que les aspects de propriété intellectuelle (IPRs) sont englobés.

## 4. EXPOSÉ DE L'INVENTION

Ces objectifs, ainsi que d'autres qui apparaîtront par la suite, sont atteints à l'aide d'un procédé d'initialisation d'un module électronique de radiocommunication permettant d'exécuter au moins un programme de radiocommunication, stocké dans une première mémoire non volatile, ladite initialisation étant basée sur des valeurs de paramètres de calibrage.

Selon l'invention, le procédé comprend les étapes suivantes, effectuées par ledit module quand il exécute ledit au moins un programme :

- lecture d'au moins un paramètre de calibrage compressé dans une deuxième mémoire non volatile ;
- décompression de chaque paramètre de calibrage compressé lu, de façon à obtenir un paramètre de calibrage décompressé ; et
- initialisation dudit module basée sur les valeurs desdits paramètres de calibrage décompressés.

Ainsi, l'invention repose sur une approche tout à fait nouvelle et inventive pour l'initialisation d'un module de radiocommunication. En effet, cette initialisation du module s'effectue à partir de la décompression de paramètres de calibrage compressés et stockés dans une mémoire non volatile de taille réduite. Le module de radiocommunication est donc libéré de l'utilisation d'une mémoire non volatile encombrante et coûteuse. La deuxième mémoire non volatile est par exemple une mémoire de type fusible, destinée à l'origine à recevoir des numéros de série.

Il est à noter que la présente invention couvre aussi bien le cas dans lequel les première et deuxième mémoires non volatiles sont embarquées dans le module de radiocommunication, que le cas dans lequel une des deux mémoires non volatiles ou aucune n'est présente dans le module.

Dans un mode de réalisation particulier, la première mémoire non volatile (externe ou interne au module) stocke en outre un programme de décompression, permettant quand il est exécuté par le module (par les moyens matériels d'exécution) d'obtenir des paramètres de calibrage décompressés à partir des paramètres de calibrage compressés.

Avantageusement, le module effectue une étape de stockage desdits paramètres de calibrage décompressés dans une troisième mémoire volatile.

Les paramètres de calibrage décompressés sont par exemple stockés dans une troisième mémoire volatile externe, par exemple, une mémoire PSRAM.

De façon préférentielle, le module effectue ladite étape de lecture, en lisant lesdits paramètres de calibrage compressé dans une mémoire non volatile interne audit module et formant ladite deuxième mémoire.

De façon avantageuse, les paramètres de calibrage comprennent au moins un paramètre relatif à un amplificateur de puissance compris dans ledit module, et appartenant au groupe comprenant :

- des paramètres de réception ;
- des paramètres de transmission ;
- des paramètres de fréquence.

L'invention concerne également un procédé de compression d'au moins un paramètre de calibrage d'un module électronique de radiocommunication permettant d'exécuter au moins un programme de radiocommunication stocké dans une première mémoire non volatile. Le module est initialisé avec une valeur de chaque paramètre de calibrage, ladite valeur de chaque paramètre de calibrage étant comprise dans une plage initiale de valeurs possibles, ladite plage initiale étant centrée sur une valeur moyenne et fonction de la dispersion dudit module.

Selon l'invention, le procédé comprend les étapes suivantes, pour au moins un paramètre de calibrage :

- obtention, pour ledit paramètre, d'une plage de valeurs utiles, de taille inférieure à ladite plage initiale, et d'une valeur moyenne dudit paramètre ;

- obtention, pour ledit paramètre, d'une valeur maximale d'erreur sur ledit paramètre de façon à conserver un fonctionnement du module de radiocommunication conforme à un cahier des charges prédéterminé ;
- obtention d'une valeur discrète dudit paramètre au sein de ladite plage de valeurs utiles ;
- compression de ladite valeur discrète en fonction de ladite valeur discrète, ladite plage de valeurs utiles dudit paramètre, ladite valeur moyenne dudit paramètre et ladite valeur maximale d'erreur de façon à obtenir une valeur compressée.

On note que le procédé de compression selon l'invention repose sur une discrétisation des plages de valeurs potentielles (ou valeurs typiques constatées en production) pour chaque paramètre de calibrage. Ainsi, il est possible de définir avec précision le nombre de bits nécessaires au stockage de chaque paramètre à calibrer en numérique (paramètre relatif à des fonctions logiques), analogique (paramètre relatif à des fonctions de type audio) et radiofréquence (paramètre relatif à l'émission et la réception d'un signal radio).

Pour un paramètre donné, les limites de la plage de valeurs utiles sont choisies de façon à englober la totalité des valeurs du paramètre donné qu'il est réellement possible de rencontrer en production.

Dans un mode de réalisation préférentiel de l'invention, le procédé comprend une étape préalable de sélection d'au moins un paramètre de calibrage, en fonction d'au moins un critère de dispersion.

Selon un aspect avantageux de l'invention, ladite étape de compression met en oeuvre une compression telle que, pour un paramètre de calibrage donné, la valeur compressée dudit paramètre donné est définie par :

$$\text{Valeur compressée} = E((\text{Valeur initiale - Offset})/\text{Granularité})$$

où
« Valeur compressée » désigne la valeur compressée dudit paramètre donné ;
« Valeur initiale » désigne la valeur discrète dudit paramètre donné ;
« Offset » correspond à une valeur de décalage définie selon la valeur et la plage typiques de dispersion connues en production ;
« Granularité » correspond à la taille du plus petit intervalle entre deux valeurs obtenues après décompression ; et
« E » désigne la notation de la fonction partie entière.

La valeur de granularité, aussi appelée « pas », est choisie en fonction de la précision nécessaire sur la valeur initiale. Pour ce faire, l'influence de l'imprécision de la valeur initiale sur les performances générales du module électronique de radiocommunication doit être analysée au préalable.

L'invention concerne aussi un procédé de décompression d'au moins un paramètre de calibrage d'un module électronique de radiocommunication permettant d'exécuter au moins un programme de radiocommunication stocké dans une première mémoire non volatile. Le module est initialisé avec une valeur de chaque paramètre de calibrage, ladite valeur de chaque paramètre de calibrage étant comprise dans une plage initiale de valeurs possibles, ladite plage initiale étant centrée sur une valeur moyenne et fonction de la dispersion dudit module.

Selon l'invention, le procédé comprend les étapes suivantes, pour au moins un paramètre de calibrage compressé :

- obtention d'une valeur de décalage préalablement définie, lors de la compression dudit paramètre, en fonction d'une plage de valeurs utiles, de taille inférieure à ladite plage initiale, et d'une valeur moyenne dudit paramètre ;
- obtention d'une valeur de granularité, préalablement définie lors de la compression dudit paramètre, en fonction d'une valeur maximale d'erreur sur ledit paramètre ;
- décompression de la valeur compressée dudit paramètre en fonction de ladite valeur compressée, ladite valeur de décalage et ladite valeur de granularité, de façon à obtenir une valeur décompressée.

Selon un aspect avantageux de l'invention, ladite étape de décompression met en oeuvre une décompression telle que, pour un paramètre de calibrage donné, la valeur décompressée dudit paramètre donné est définie par :

$$\text{Valeur décompressée} = \text{Offset} + (\text{Granularité} * \text{valeur compressée})$$

où
« Valeur décompressée » désigne la valeur décompressée dudit paramètre donné ;
« Valeur compressée » désigne la valeur compressée dudit paramètre donné ;

« Offset » correspond à une valeur de décalage définie selon une valeur et une plage typiques de dispersion connues en production ; et

« Granularité » correspond à la taille du plus petit intervalle entre deux valeurs obtenues après décompression.

L'invention concerne en outre un produit programme d'ordinateur téléchargeable depuis un réseau de communication et/ou enregistré sur un support lisible par ordinateur et/ou exécutable par un processeur, comprenant des instructions de code de programme pour l'exécution des étapes du procédé précité, lorsque ledit programme est exécuté sur un ordinateur.

L'invention concerne aussi, un moyen de stockage, éventuellement totalement ou partiellement amovible, lisible par un ordinateur, stockant un jeu d'instructions exécutables par ledit ordinateur pour mettre en oeuvre le procédé précité.

## 5. LISTE DES FIGURES

D'autres caractéristiques et avantages de modes de réalisation de l'invention apparaîtront à la lecture de la description suivante d'un mode de réalisation particulier de l'invention, donné à titre d'exemple indicatif et non limitatif (tous les modes de réalisation de l'invention ne sont pas limités aux caractéristiques et avantages de ce mode de réalisation particulier), et des dessins annexés, dans lesquels :

- la figure 1 représente un organigramme d'un mode de réalisation particulier du procédé d'initialisation de l'invention ;
- la figure 2 représente un organigramme d'un mode de réalisation particulier du procédé de compression de l'invention ;
- la figure 3 représente un organigramme d'un mode de réalisation particulier du procédé de décompression de l'invention ;
- les figures 4a à 4c illustrent le principe de discrétisation des valeurs des paramètres de calibrage, selon un mode de réalisation particulier de l'invention ;
- la figure 5 présente un schéma bloc d'un exemple de module de radiocommunication selon l'art antérieur ;
- la figure 6 présente un schéma bloc d'un mode de réalisation particulier d'un module de radiocommunication selon l'invention, et d'un dispositif de radiocommunication comprenant un tel module ;
- la figure 7 présente la structure simplifiée d'un mode de réalisation particulier d'un module de radiocommunication selon l'invention ;
- la figure 8 illustre un tableau présentant des paramètres de calibrage compressés, pour le cas particulier d'un module de radiocommunication de type GSM quadri-bandes; et
- la figure 9 illustre un tableau présentant des paramètres de calibrage décompressés, pour le cas de la figure 8.

## 6. DESCRIPTION DÉTAILLÉE

### 6.1 Description d'un mode de réalisation du procédé d'initialisation d'un module de radiocommunication selon l'invention

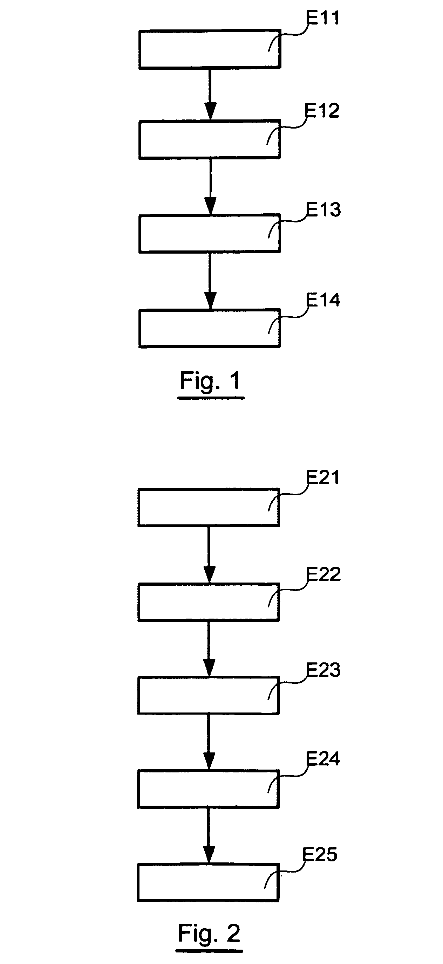

On présente, en relation avec la **figure 1**, un organigramme illustrant un mode de réalisation particulier du procédé d'initialisation d'un module de radiocommunication selon l'invention, dans le cas où le module est initialisé avec une pluralité de paramètres de calibrage.

On suppose que, à l'initialisation, le module exécute un programme de radiocommunication (aussi appelé logiciel fonctionnel) stocké dans une première mémoire non volatile externe.

Lors d'une première étape E11, le module lit des paramètres de calibrage compressés dans une deuxième mémoire non volatile. Dans un mode de réalisation particulier, la deuxième mémoire non volatile est interne au module.

Lors d'une étape E12, le module exécute un programme de décompression (par exemple stocké dans la première mémoire non volatile externe) permettant de décompresser chaque paramètre de calibrage compressé lu à l'étape E11.

Ensuite, lors d'une étape E13, le module stocke, par exemple, dans une troisième mémoire volatile externe les paramètres de calibrage décompressés à l'étape E12.

Enfin, lors d'une étape E14, on initialise le module avec les valeurs des paramètres de calibrage décompressés obtenues à l'étape E12.

### 6.2 Description d'un mode de réalisation du procédé de compression de paramètres de calibrage selon l'invention

#### 6.2.1 Principe de la compression

Le procédé de compression de l'invention repose sur l'utilisation d'un modèle mathématique du fonctionnement d'un amplificateur de puissance embarqué dans un module de radiocommunication d'une part et sur une discrétisation des plages de valeurs potentielles pour chaque paramètre de calibrage (aussi appelé paramètre de calibration) minimal d'autre part. Le procédé de compression de l'invention permet par exemple d'obtenir un ensemble de paramètres de calibrage réduits dans un espace mémoire inférieur à 200 bits. Ainsi, il est possible de réaliser et de produire un module de radiocommunication sans mémoire volatile interne dédiée au stockage de paramètres de calibrage.

*6.2.2 Identification des paramètres de calibrage minimaux nécessaires au bon fonctionnement du module de radiocommunication*

Tous les paramètres de calibrage couramment utilisés ne sont pas nécessaires. Il est nécessaire de stocker uniquement les paramètres (appelés paramètres de calibrage minimaux) dont les effets de la dispersion en production ont un impact sur la qualité du module de radiocommunication.

On présente en annexe 1, une liste de paramètres de calibrage minimaux nécessaires au bon fonctionnement du module de radiocommunication et un exemple de calcul de la taille minimale de mémoire ROM (pour « Read Only Memory » en anglais) nécessaire pour stocker ces paramètres de calibrage minimaux. Cette annexe fait partie intégrante de la présente description.

Comme déjà indiqué, la modélisation mathématique du fonctionnement de l'amplificateur de puissance embarqué dans le module de radiocommunication, permet de substituer au stockage actuel de la consigne à programmer pour chaque niveau de puissance, les paramètres de l'équation permettant d'obtenir cette consigne.

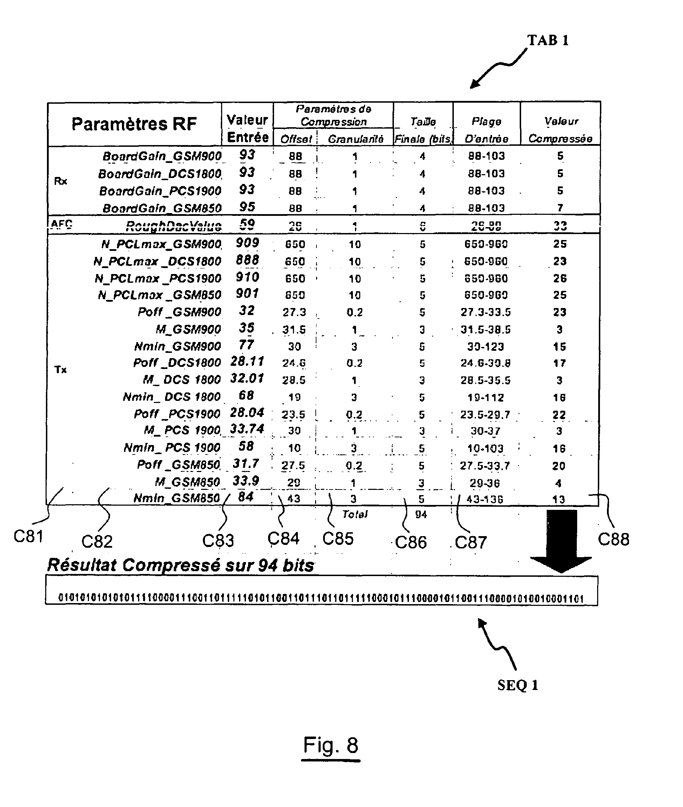

On présente en relation avec la **figure 8**, un tableau TAB1 présentant les paramètres de calibrage minimaux, pour le cas particulier d'un module de radiocommunication de type GSM quadri-bandes. La première colonne C81 du tableau indique le type de paramètre (Rx, AFC et Tx). La deuxième colonne C82 indique le nom des paramètres de calibrage (par exemple « BoardGain_GSM900 »). La troisième colonne C83 du tableau indique la valeur d'entrée (aussi appelée par la suite valeur initiale). Les quatrième C84 et cinquième C85 colonnes du tableau indiquent les paramètres de compression, à savoir l'offset (quatrième colonne) et la granularité (cinquième colonne). La sixième colonne C86 du tableau indique la taille en bits (« taille finale ») du paramètre de calibrage compressé. La septième colonne C87 du tableau indique la plage d'entrée (aussi appelée par la suite plage initiale). La huitième colonne C88 du tableau indique la valeur compressée du paramètre de calibrage.

On note que l'offset correspond à un décalage défini selon la valeur et la plage typiques de dispersion connues en production.

On note également que la granularité est définie en fonction de la sensibilité des résultats de puissance de sortie sur le paramètre de calibrage.

Dans toute la suite de ce document, on considérera les définitions suivantes :

- BoardGain correspond au gain, exprimé en dB, de l'ensemble de la chaîne de l'amplificateur de puissance (« PA » pour « Power Amplifier » en anglais). On stocke trois paramètres pour chaque bande de fréquence et un paramètre supplémentaire, correspondant à la plus petite boucle de contrôle de puissance (puissance max, saturation) pour chaque bande de fréquence.

On obtient un total de 21 paramètres de calibration radiofréquence pour une taille d'environ 300bits.

*6.2.3 Réduction de la plage de codage initiale*

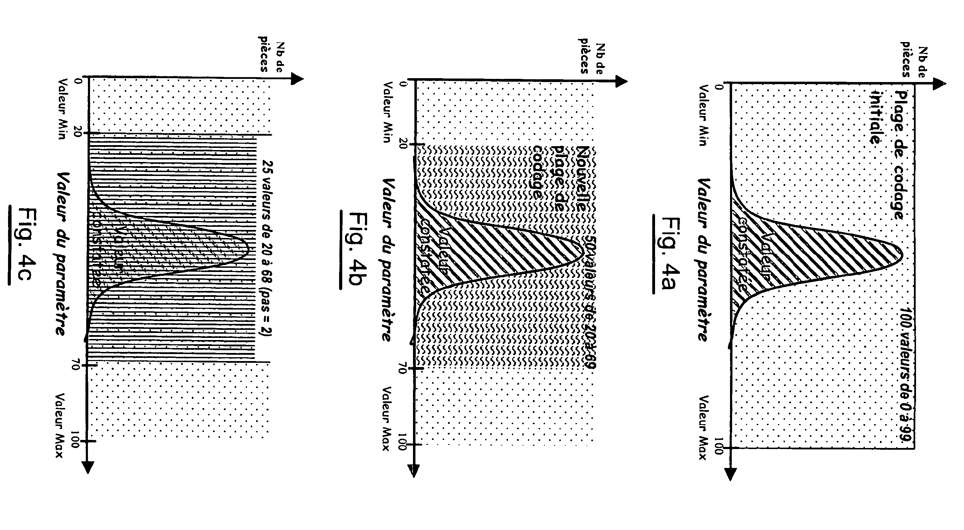

L'invention repose sur l'observation suivante ; Comme illustré par la **figure 4a**, la plage initiale de valeurs possibles d'un paramètre donné est centrée sur une valeur moyenne. Comme illustré par la **figure 4b**, l'analyse de dispersion sur chaque paramètre stocké en mémoire permet de définir une plage de valeurs « utiles », de taille inférieure à la plage initiale. Ainsi, il est possible de diminuer la plage utilisée pour le codage.

*6.2.4 Discrétisation des valeurs des paramètres*

Comme illustré par la **figure 4c**, l'opération de discrétisation consiste à diviser la plage de valeurs « utiles » en un ensemble fini de valeurs discrètes, séparées par un pas dont la valeur doit être définie spécifiquement pour chaque paramètre à stocker.

La valeur initiale du paramètre sera arrondie à la valeur discrète la plus proche.

*6.2.5 Formule de compression des paramètres de calibration*

Chaque paramètre de calibration est compressé suivant une formule de compression définie par :

$$\text{Valeur compressée} = E((\text{Valeur initiale} - \text{Offset})/\text{Granularité})$$

où

« Valeur compressée » désigne la valeur compressée du paramètre ;

« Valeur initiale » désigne la valeur discrète du paramètre à compresser ;

« Offset » correspond à une valeur de décalage définie selon une valeur et une plage typiques de dispersion connues en production ;

« Granularité » correspond à la taille du plus petit intervalle entre deux valeurs obtenues après décompression (en d'autres termes elle correspond au pas de discrétisation à appliquer) ; et

« E » désigne la notation de la fonction partie entière.

Dans le présent mode de réalisation (en référence à la figure 8), on réduit la taille de l'espace de stockage de 300bits à seulement 94bits.

On présente maintenant, en relation avec la **figure 2**, un organigramme illustrant un mode de réalisation particulier du procédé de compression de paramètres de calibrage selon l'invention.

Lors d'une première étape E21, on sélectionne un paramètre de calibrage, en fonction d'un critère de dispersion relatif à la qualité du module de radiocommunication. Le module de radiocommunication doit être initialisé avec une valeur initiale. On note que le paramètre sélectionné présente une valeur qui est comprise dans une plage initiale de valeurs possibles. La plage initiale est centrée sur une valeur moyenne.

Lors d'une étape E22, on obtient, pour le paramètre sélectionné à l'étape E21, une plage de valeurs utiles, de taille inférieure à la plage initiale de valeurs et une valeur moyenne du paramètre.

Lors d'une étape E23, on obtient, pour le paramètre sélectionné à l'étape E21, une valeur maximale d'erreur sur le paramètre, de façon à conserver un fonctionnement du module de radiocommunication conforme à son cahier des charges.

Ensuite, lors d'une étape E24, on discrétise la plage de valeurs utiles obtenue à l'étape E22, puis on obtient une valeur discrète du paramètre sélectionné à l'étape E21, en choisissant la valeur discrète la plus proche de la valeur initiale.

Enfin, lors d'une étape E25, on effectue la compression de la valeur discrète obtenue à l'étape E24 en fonction de la valeur discrète, la plage de valeurs utiles (étape E22), la valeur moyenne du paramètre (étape E22) et la valeur maximale d'erreur (étape E23).

6.3 Description d'un mode de réalisation du procédé de décompression de paramètres de calibrage compressés selon l'invention

*6.3.1 Principe de la décompression*

L'utilisation d'un processus de réduction de taille entraîne une inévitable opération de décompression. Cette dernière est spécifique au mode de compression utilisé, et est effectuée lors de l'initialisation du module de radiocommunication, c'est-à-dire lors de l'exécution du programme de radiocommunication par le module. Dans un mode de réalisation particulier, le programme de radiocommunication et le programme de décompression sont stockés dans une même mémoire non volatile externe.

*6.3.1 Formule de décompression des paramètres de calibration compressés*

Lors d'une première étape E21, on sélectionne un paramètre de calibrage, en fonction d'un critère de dispersion relatif à la qualité du module de radiocommunication. Le module de radiocommunication doit être initialisé avec une valeur initiale. On note que le paramètre sélectionné présente une valeur qui est comprise dans une plage initiale de valeurs possibles. La plage initiale est centrée sur une valeur moyenne et est fonction de la dispersion du module.

Lors d'une étape E22, on obtient, pour le paramètre sélectionné à l'étape E21, une plage de valeurs utiles, de taille inférieure à la plage initiale de valeurs et une valeur moyenne du paramètre.

Lors d'une étape E23, on obtient, pour le paramètre sélectionné à l'étape E21, une valeur maximale d'erreur sur le paramètre, de façon à conserver un fonctionnement du module de radiocommunication conforme à son cahier des charges.

Ensuite, lors d'une étape E24, on discrétise la plage de valeurs utiles obtenue à l'étape E22, puis on obtient une valeur discrète du paramètre sélectionné à l'étape E21, en choisissant la valeur discrète la plus proche de la valeur initiale.

Enfin, lors d'une étape E25, on effectue la compression de la valeur discrète obtenue à l'étape E24 en fonction de la valeur discrète, la plage de valeurs utiles (étape E22), la valeur moyenne du paramètre (étape E22) et la valeur maximale d'erreur (étape E23).

6.3 Description d'un mode de réalisation du procédé de décompression de paramètres de calibrage compressés selon l'invention

*6.3.1 Principe de la décompression*

L'utilisation d'un processus de réduction de taille entraîne une inévitable opération de décompression. Cette dernière est spécifique au mode de compression utilisé, et est effectuée lors de l'initialisation du module de radiocommunication, c'est-à-dire lors de l'exécution du programme de radiocommunication par le module. Dans un mode de réalisation particulier, le programme de radiocommunication et le programme de décompression sont stockés dans une même mémoire non volatile externe.

*6.3.1 Formule de décompression des paramètres de calibration compressés*

Chaque paramètre de calibration est décompressé suivant une formule de compression définie par :

$$\text{Valeur décompressée} = \text{Offset} + (\text{Granularité} * \text{valeur compressée})$$

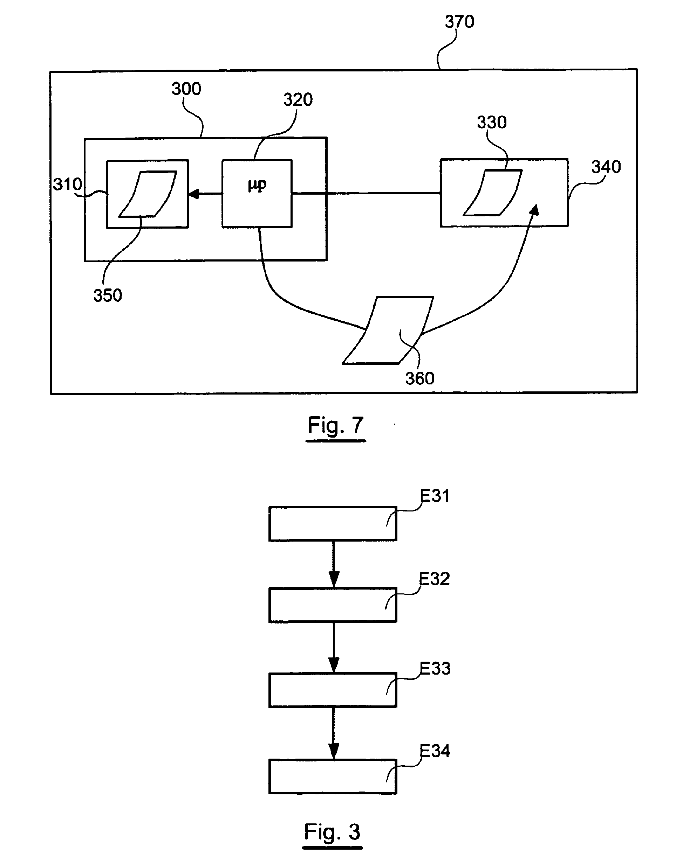

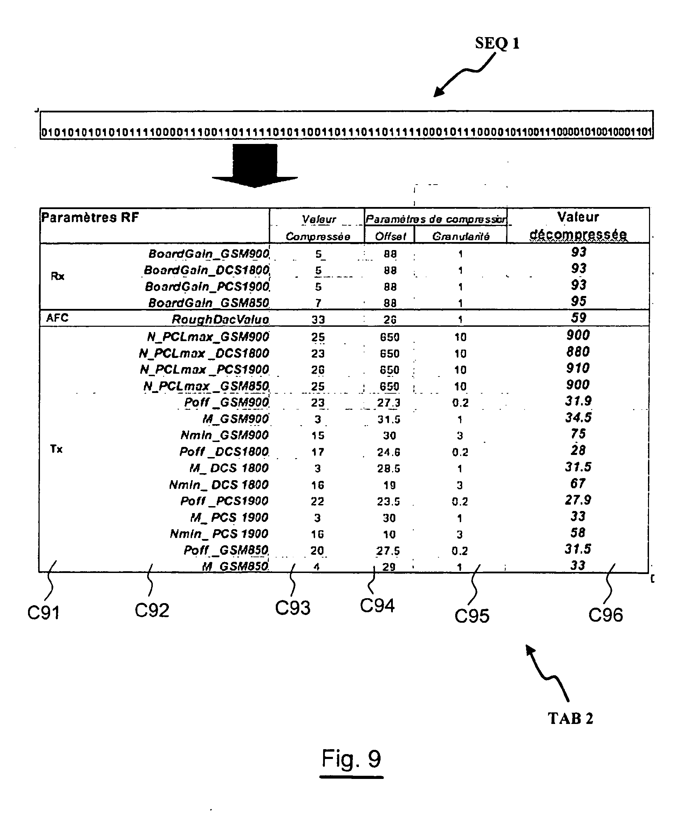

où
« Valeur décompressée » désigne la valeur décompressée du paramètre donné ;
« Valeur compressée » désigne la valeur compressée du paramètre donné ;
« Offset » correspond à une valeur de décalage définie selon la valeur et la plage typiques de dispersion connues en production ; et
« Granularité » correspond à la taille du plus petit intervalle entre deux valeurs obtenues après décompression (en d'autres termes elle correspond au pas de discrétisation à appliquer).
On présente désormais en relation avec la **figure 9,** un exemple de décompression correspondant à l'exemple de compression de la figure 8.
La séquence binaire SEQ1 de 94 bits est celle obtenue dans l'exemple de compression décrit à la figure 8.
Le tableau TAB2 présente les paramètres de calibrage minimaux, pour le cas particulier d'un module de radiocommunication de type GSM quadri-bandes. La première colonne C91 du tableau indique le type de paramètre (Rx, AFC et Tx). La deuxième colonne C92 indique le nom des paramètres de calibrage (par exemple « BoardGain_ GSM900 »). La troisième colonne C93 du tableau indique la valeur compressée du paramètre de calibrage. Les quatrième C94 et cinquième C95 colonnes du tableau indiquent les paramètres de compression, à savoir l'offset et la granularité. La sixième colonne C96 du tableau indique la valeur décompressée du paramètre de calibrage.
On présente désormais, en relation avec la **figure 3**, un organigramme illustrant un mode de réalisation particulier du procédé de décompression de paramètres de calibrage compressés selon l'invention.
Lors d'une première étape E31, on lit un paramètre de calibrage compressé stocké dans une mémoire non volatile interne au module de radiocommunication.
Lors d'une étape E32, on obtient, pour le paramètre lu à l'étape E31, une valeur de décalage qui a été définie lors de la compression du paramètre, en fonction d'une plage de valeurs utiles, de taille inférieure à la plage initiale, et d'une valeur moyenne du paramètre.
Ensuite, lors d'une étape E33, on obtient, pour le paramètre lu à l'étape E31, une valeur de granularité, qui a été définie lors de la compression du paramètre, en fonction d'une valeur maximale d'erreur sur le paramètre.
Enfin, lors d'une étape E34, on effectue la décompression de la valeur compressée du paramètre lu à l'étape E31 en fonction de la valeur compressée, la valeur de décalage obtenue à l'étape E32 et la valeur de granularité obtenue à l'étape E33.

6.4 Description d'un mode de réalisation du module de radiocommunication selon l'invention

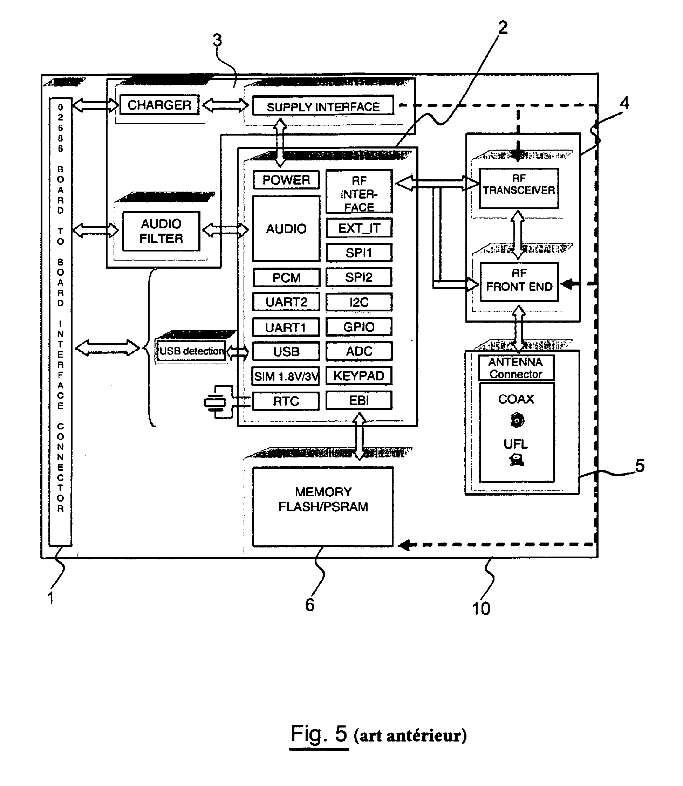

L'exemple de module de radiocommunication 10 selon l'art antérieur, illustré sur par la **figure 5**, comprend :

- un connecteur d'interface carte à carte 1 ;
- un bloc bande de base 2, comprenant lui-même une pluralité de sous-blocs :

* Power : Gestion de l'alimentation,
* Audio : Gestion de l'interface audio,
* PCM : Sortie « Pulse Code Modulation », sortie audio,
* UART1 et 2 : Port d'interface série,
* USB : Port d'interface série,
* SIM 1.8V/3V : Interface carte SIM 1.8 ou 3V,
* RTC : "Real Time Clock",
* RF Interface : Interface avec les blocs RF,
* EXT_IT : Interruption externe (« External Interruption »),
* SPI1 et 2 : Interface série,
* I2C : Interface bus "I2C",
* GPIO : Signaux logiques d'entrée/sortie,
* ADC : Entrée analogique (ADC for Analog to Digital Converter »),
* Keypad : Interface clavier ;

- un bloc analogique 3, comprenant lui-même une pluralité de sous-blocs :

   * Audio Filter : Filtrage des signaux d'entrée sortie audio
   * Charger : Chargeur de batterie
   * Supply Interface : Interface d'alimentation

- un bloc radio 4, comprenant lui-même une pluralité de sous-blocs :

   * RF Transceiver : Circuit d'émission-réception Radio-Fréquence
   * RF Front End : Circuit d'amplification et de commutation Radio-Fréquence.

- un bloc de connexion 5, comprenant lui-même une connexion d'antenne, supportant un câble coaxial à souder ou une fiche coaxiale de type « UFL » ;
- un boîtier « combo » 6 combinant une mémoire non volatile (mémoire reprogrammable Flash dans cet exemple) et une mémoire volatile (mémoire PSRAM dans cet exemple), permettant de stocker et exécuter un programme de radiocommunication (software).

De façon classique, et comme déjà expliqué ci-dessus, ce module 10 est destiné à être reporté sur un circuit imprimé d'un dispositif de radiocommunication (téléphone portable, modem, ou tout autre dispositif exploitant un standard sans fil).

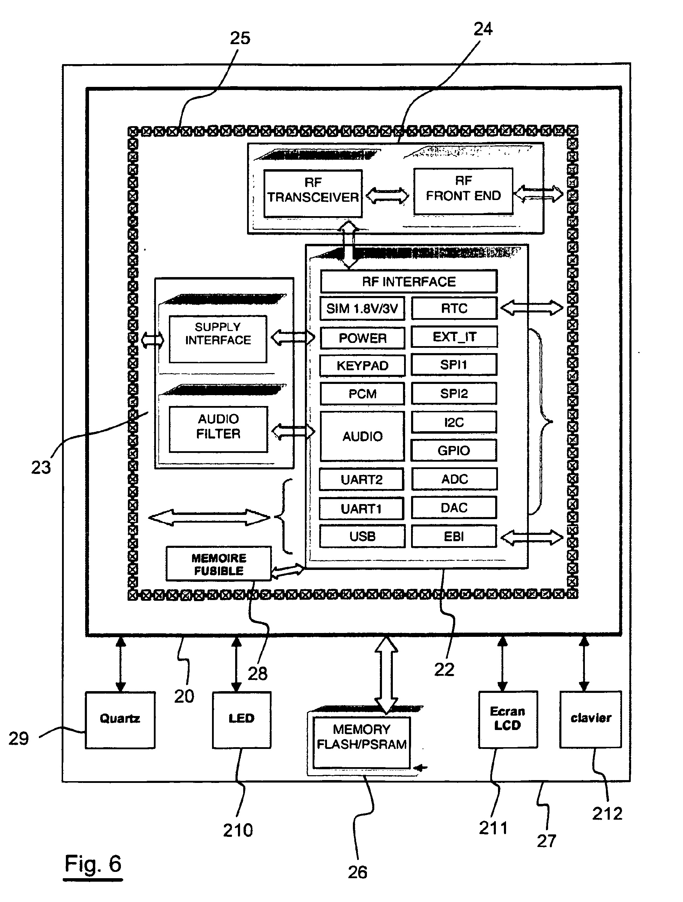

On présente maintenant, en relation avec la **figure 6,** un mode de réalisation particulier d'un module de radiocommunication selon l'invention. Ce module 20 comprend :

- un bloc bande de base 22, sensiblement identique à celui (référencé 2) de la figure 5 (il s'en distingue simplement en ce qu'il comprend un sous-bloc supplémentaire (DAC pour Digital Analog Converter en anglais, convertisseur numérique analogique en français)) ;
- un bloc analogique 23, sensiblement identique à celui (référencé 3) de la figure 5 (il s'en distingue simplement en ce qu'il ne comprend pas l'un des sous-blocs (Charger)) ;
- un bloc radio 24, identique à celui (référencé 24) de la figure 5 ;
- une mémoire non volatile de faible capacité (mémoire non reprogrammable OTP à fusible dans cet exemple) 28. Comme expliqué en détail par la suite, elle permet de stocker les paramètres de calibrage compressés ;
- un ensemble de billes de connexion 25, permettant un report en surface du module selon l'invention (qui se présente sous la forme d'un boîtier), sur un circuit imprimé d'un dispositif de radiocommunication 27, à l'aide d'une technique classique de report, par exemple BGA ou LGA. Ceci permet un grand nombre d'interfaces d'entrée/sortie (Ios), dont celles devant permettre une connexion mémoire donnée/adresse (par exemple 16+23+6).

Comme également illustré sur la figure 6, d'autres composants sont reportés sur le circuit imprimé du dispositif de radiocommunication 27, à savoir dans cet exemple :

- une ou plusieurs mémoires externes au module. Dans cet exemple, on a représenté un boîtier « combo » 26 combinant une mémoire non volatile (mémoire reprogrammable Flash dans cet exemple) et une mémoire volatile (mémoire PSRAM dans cet exemple), permettant de stocker et exécuter un programme de radiocommunication (software) et un programme de décompression. Il est clair que le fabricant du dispositif peut choisir librement le ou les boîtiers de mémoire qu'il souhaite placer sur le circuit imprimé de son dispositif, ce qui est l'un des avantages de la présente invention ;

- un quartz 29 ;
- une LED 210 ;
- un écran LCD 211 ; et
- un clavier 212.

6.5 Module de radiocommunication

La **figure 7** présente de façon schématique la structure d'un module de radiocommunication 300 selon un mode de réalisation particulier de l'invention, qui comprend une mémoire non volatile de faible capacité 310, dans laquelle sont stockés des paramètres de calibrage compressés 350, et une unité de traitement 320 équipée d'un microprocesseur μP, qui est piloté par un programme d'ordinateur (ou application) 330 qui, quand il est exécuté, met en oeuvre le procédé de décompression selon l'invention. Dans le mode de réalisation illustré, le programme d'ordinateur 330 est stocké dans une mémoire externe 340 au module. A l'initialisation du module, l'unité de traitement 320 lit les paramètres de calibrage compressés stockés dans la mémoire 310. Le microprocesseur μP traite ces paramètres de calibrage compressés, selon les instructions du programme 330, pour obtenir des paramètres de calibrage décompressés 360, qui sont ensuite stockés dans la mémoire externe 340. A titre illustratif, le module de radiocommunication 300 selon l'invention et la mémoire externe 340 sont embarqués dans un dispositif de radiocommunication 370.

Dans un mode de réalisation particulier, le programme d'ordinateur 330, quand il est exécuté, met également en oeuvre au moins partiellement les blocs fonctionnels suivants (décrits en référence à la figure 6) :

- le bloc bande de base 22 ;
- le bloc analogique 23 ; et
- le bloc radio 24.

**ANNEXE 1 :**

**PARAMETRES DE CALIBRATION RF INDISPENSABLES AU BON FONCTIONNEMENT D'UN MODULE DE RADIOCOMMUNICATION**

**1. Introduction**

A titre d'exemple, on présente ci-après une liste de paramètres de calibrage minimaux (aussi appelés paramètres essentiels de calibration) nécessaires au bon fonctionnement du module de radiocommunication et un exemple de calcul de la taille minimale de mémoire ROM (pour « Read Only Memory » en anglais) nécessaire pour stocker les paramètres de calibrage minimaux précités.

Par paramètre de calibrage minimal, on entend un paramètre dont les effets de la dispersion en production ont un impact sur la qualité du module de radiocommunication. Dans l'exemple discuté, les paramètres de calibrage minimaux sont compressés puis stockés dans une mémoire non volatile interne au module, par exemple une mémoire ROM. On note que les paramètres de calibrage minimaux peuvent être stockés dans n'importe quel type de mémoire OTP (pour « One Time Programable » en anglais).

Il est important de noter que l'ensemble des autres paramètres stockés dans la mémoire non volatile du module de communication peuvent être codés « en dur » dans le programme de radiocommunication (c'est-à-dire le logiciel fonctionnel).

Le calcul de la taille minimale de mémoire ROM nécessaire, présenté ci-après, est basé sur les résultats du « run Q2686-PR2 », c'est-à-dire 400 modules, avec des composants tous issus d'un même lot. Ceci n'est donc représentatif que d'une dispersion au sein d'un lot, et non d'une dispersion lot à lot. On note qu'un « run » signifie « série » dans un langage familier. Le « Run Q2686-PR2 » signifie la production d'une série de Prototype (la seconde, en l'occurrence, car « PR2 » signifie « Prototype Run n°2 ») du produit « Q2686 ».

**2. Analyse des paramètres essentiels de calibration**

| Paramètre | Taille actuelle en E2P | Description | Valeur typique | Plage constatée sur Q2686 - PR2 | Taille miniale |
|---|---|---|---|---|---|
| BoardGain_GSM90 BoardGain_DCS1800 BoardGain_PCS1900 BoardGain_GSM85 | u8 u8 u8 u8 | Gain de la chaîne de réception, paramètre nécessaire pour respecter la norme en terme de mesure de RSSI. | 95 95 95 95 | 92-98 92-97 91-97 91-99 | u4 (16) u4 u4 u4 |
| RoughDacValue | u16 | Valeur de calibration grossière de l'AFC | 55 | 40 - 75 | u6 (64) |
| AfcStepValue | u16 | Pente : Nb de Hz par pas d'AFC | 5 | Env. identique pour un quartz donné | - |
| N_PCLmax_GSM900 N_PCLmax _DCS1800 N_PCLmax _PCS1900 N_PCLmax GSM850 | u16 u16 u16 u16 | Valeurs de DAC pour sortir la puissance à PCLmax -indispensable pour perfs RF@Pmax. | | 711 - 920 716 - 888 701 - 910 717 - 901 | u8 (256) u8 u8 u8 |
| **Paramètres de modélisation de l'Amplificateur RF (calculés par le banc de calibration)** | | | | | |
| Poff_GSM900 M_GSM900 Nmin_GSM900 | | Paramètres de l'équation caractérisant le PA en GSM900 | 31.6 35 80 | 28.5 - 32.3 33.4 - 36.5 60 - 95 | u6 (64) u6 u6 |
| Poff_DCS1800 M_ DCS 1800 Nmin DCS 1800 | | Paramètres de l'équation caractérisant le PA en GSM 1800 | 27.7 31.5 70 | 26 - 29.3 30.4 - 33.9 40 - 90 | u6 (64) u6 u6 |
| Poff_PCS1900 M_PCS 1900 Nmin_PCS 1900 | | Paramètres de l'équation caractérisant le PA en GSM1900 | 28 33.8 65 | 24.7 - 28.8 31.4 - 35.8 27-84 | u6 (64) u6 u6 |
| Poff_GSM850 M_GSM850 Nmin GSM850 | | Paramètres de l'équation caractérisant le PA en GSM850 | 31.8 33 85 | 28.9 - 32.3 31.4 - 34.2 72 - 108 | u6 (64) u6 u6 |

Les tailles minimales exprimées ci-dessus en u4, u6 ou u8 donnent pour u4 = 4 bits, u6 = 6 bits et u8 = 8 bits. « u » signifie simplement « unsigned » c'est à dire que le nombre est codé en binaire non signé (nombre entier positif). Soit un minimum de bit nécessaire pour coder les informations essentielles à la calibration du module de 126 bits (4 x u4 + u6 + 4 x u8 + 12 x u6 = 4 x 4 + 6 + 4 x 8 + 12 x 6 = 126)

## 3. Axes d'optimisation

a) Réduction de la résolution du codage de certains paramètres caractérisant l'amplificateur. Plus de recul sur la dispersion lot à lot semble néanmoins souhaitable avant de tenter une discrétisation trop forte de ces paramètres.

b) Le paramètre caractérisant l'amplificateur « Poff » semble être assez semblable pour les deux bandes basses et les deux bandes hautes. Une étude effectuée sur 200 modules montre que la différence entre les Poff est de -0.6 à +0.3 dB sur les bandes basses, et de -0.5 à +1.1 dB sur les bandes hautes.

c) Similitudes également entre les paramètres M sur les deux bandes basses et les deux bandes hautes. Sur 200 modules la différence entre les M est de -1.4 à +1.4 sur les bandes basses, et de -2.3 à +0.5 sur les bandes hautes.

d) Idem pour le paramètre Nmin, avec, sur 200 modules une différence entre les Nmin entre -22 et 4 sur les bandes basses, et de 4 à 13 sur les bandes hautes.

e) Pour le paramètre N_PCLmax, sur 200 modules la différence de -15 et +25 sur les bandes basses, et -23 à +56 sur les bandes hautes. L'opération semble moins rentable.

f) En conclusion on constate que l'on pourrait, pour les bandes basses comme les bandes hautes, ne coder que les paramètres correspondant aux bandes Europe, et ne coder qu'un offset par rapport à ces dernières, pour les bandes US. Ceci est valable également pour les N_PCLmax. C'est un moyen d'exploiter la corrélation existant entres les deux bandes basses et les deux bandes hautes. On obtiendrait alors le tableau suivant :

| | | | |
|---|---|---|---|
| | N_PCLmax_GSM900<br><br>N_PCLmax<br>_DCS1800<br>N_PCLmax<br>_PCS1900<br>N_PCLmax<br>GSM850 | Valeurs de DAC pour sortir la puissance à PCLmax<br><br>Delta / DCS<br>Delta / GSM900 | u8 (256)<br>u8<br>s7 (+/-62)<br>s7 (+/-62) |
| Tx | Poff_GSM900<br>M_GSM900<br>Nmin GSM900 | Paramètres de l'équation caractérisant le PA en GSM900 | u6 (64)<br>u6<br>u6 |
| | Poff _DCS1800<br>M_ DCS 1800<br>Nmin_DCS 1800 | Paramètres de l'équation caractérisant le PA en GSM1800 | u6 (64)<br>u6<br>u6 |
| | Poff_PCS1900<br>M_PCS 1900<br>Nmin PCS 1900 | Delta paramètres PCS par rapport au DCS | s5 (+/-16)<br>s6 (+/-32)<br>s5 (+/-16) |
| | Poff _GSM850<br>M_GSM850<br>Nmin GSM850 | Delta paramètres GSM850 par rapport au GSM900 | s5 (+/-16)<br>s6 (+/-32)<br>s5 (+/-16) |

L'économie en nombre de bits utilisés n'est pas si évidente. En effet, on économiserait seulement 6 bits.

Cela vient du fait que l'étude initiale tient déjà compte du fait que la plage de valeurs « utiles » (issues des plages constatées en production) est réduite, et que la taille de la variable a été déjà réduite en conséquence.

**4. Résolution nécessaire**

Il apparaît intéressant, à ce stade de la réflexion, d'analyser l'influence de la précision des différents paramètres caractérisant l'amplificateur de puissance (noté par la suite) sur l'erreur finale de calibration.

On considère, à la base, que l'erreur résiduelle de la calibration initiale (erreur effectuée lors de la détermination des paramètres par calcul itératif) est de $\pm 0.4$ dB.

Toute erreur liée à une réduction de résolution des paramètres viendra s'ajouter à cette erreur initiale.

Si l'on considère l'équation caractérisant l'amplificateur de puissance RF :

$$P = M \log (k) + Poff + M \log (N - Nmin)$$

où

k est la constante qui caractérise le convertisseur numérique analogique (noté par la suite DAC), avec dans le cas présent, log (k) = -2.78 ;

P : Puissance RF en sortie du produit exprimée en dBm ;

M : Paramètre caractérisant l'amplificateur de puissance RF (assimilable à une « pente » ) ;

Poff : Paramètre caractérisant l'amplificateur de puissance RF (assimilable à un offset) ;

N : Valeur numérique appliquée au convertisseur numérique-analogique générant la tension de consigne appliquée à l'amplificateur ;

Nmin : Paramètre caractérisant l'amplificateur de puissance RF.

On peut estimer l'incidence de la résolution des trois paramètres M, Nmin et Poff en dérivant la fonction partiellement sur ces paramètres et en majorant la dérivée à l'aide des valeurs extrêmes des paramètres, constatées sur le PR2 (400 modules seulement). Il s'agit là plutôt d'estimer quelles sont les paramètres les plus sensibles que de chiffrer précisément l'incidence sur la précision (nombre insuffisant de cartes produites).

Soit :

$$\frac{\partial P}{\partial M} = \log(k) + \log(N - N\min) < \log(k) + \log(N_{MAX} - N\min_{MIN}) < 0.2$$

C'est-à-dire, pratiquement, qu'une variation de 1 sur le paramètre M aura pour incidence une erreur maximale de 0.2 dB sur la calibration (valeur calculée à partir de la plage constatée en production, sur 400 modules).

Plus concrètement, que dans le cas où on choisirait de mettre en commun le paramètre M pour les deux bandes basses ou hautes, l'erreur engendrée serait de l'ordre de 0.6 dB.

$$\frac{\partial P}{\partial N\min} = \frac{-M}{(N - N\min) \times \ln(10)} < \frac{-M_{MAX}}{(N_{MIN} - N\min_{MAX}) \times \ln(10)} \cong 0.12$$

De la même façon, une variation de 1 sur le paramètre Nmin aura pour incidence une erreur maximale de 0.12 dB sur la calibration (valeur calculée à partir de la plage constatée en production, sur 400 modules).

Dans le cas où on choisirait de mettre en commun le paramètre Nmin pour les deux bandes basses ou hautes, l'erreur engendrée serait de l'ordre de 3 dB.

$$\frac{\partial P}{\partial Poff} = 1$$

Une variation de 0.1 dB sur le paramètre Poff ayant la même incidence sur l'erreur de calibration, on aura avantage à conserver pour ce paramètre sa résolution actuelle, à savoir 0.1 dB.

Il s'agit là du paramètre le plus sensible, et mettre en commun ce paramètre pour les deux bandes basses ou hautes, compte tenu de l'étude effectuée plus haut, engendrerait une erreur de 1.6 dB.

**5. Application pratique**

Voici un exemple concret de réduction de la résolution de codage des différents paramètres, s'appuyant sur l'étude précédente :

• BoardGain : Une résolution moindre n'est pas envisageable, la marge sur ce paramètre étant déjà faible (marges de 1 dB). La norme autorise +/-3 dB. Un passage à une résolution de 2 dB générerait des produits non conformes ;

• RoughDACValue : La résolution actuelle est déjà de l'ordre de 1 ppm. Une résolution moindre (2 ppm par exemple), signifie concrètement 1 ppm de moins sur l'aging autorisé, alors que ce dernier est déjà très limite (env 1 ppm/an) ;

• N_PCLmax : La résolution actuelle paraît superflue. Si on examine la sensibilité sur ce paramètre, on obtient la formule suivante :

$$\frac{\partial P}{\partial N} = \frac{M}{(N - N\min) \times \ln(10)} < \frac{M_{MAX}}{(N_{MIN} - N\min_{MAX}) \times \ln(10)}$$

et en prenant MMAX <36.5 ; NMIN >700 et NminMAX <110, on obtient une sensibilité max de 0.027 dB/pas de DAC ;

Ce paramètre a pour objectif une calibration fine du PCL max, PCL le plus sensible, tant d'un point de vue client que d'un point de vue FTA. La détermination de cette valeur est effectuée très précisément par le banc de test.

Si on tolère une imprécision sur cette puissance de 0.2 dB (pas de quoi faire entrer le PA en saturation), on en conclut que l'on pourrait réduire la résolution à 8 pas de DAC. Soit 3 bits d'économisés, et une taille de la variable qui passe de u8 à u5 (32 pas). Soit, par exemple, 32 valeurs échelonnées de 700 à 948.

L'économie totale serait donc de 12 bits.

- Nmin : On a vu que la sensibilité sur ce paramètre était au pire de 0.12 dB/pas.
  Cela signifie que l'on peut envisager, par exemple, le passage à une résolution de 2 pas, ce qui engendrerait une erreur de 0.24 dB ;

Les 4 variables u6 deviendraient des variables u5 (32 pas) soit une économie totale de 4 bits.

- M : La sensibilité sur ce paramètre étant de 0.02 dB/pas (résolution actuelle de 0.1). On peut donc envisager une résolution moins fine, par exemple 0.8. Les 4 variables u6 deviendraient des variables u3 (8 pas). Soit par exemple de 30 à 36.4 par pas de 0.8 ;

L'économie totale engendrée serait alors de 12 bits pour une erreur de 0.16 dB.

- Poff : On a vu que la sensibilité sur ce paramètre était maximale. On pourrait donc se limiter à réduire la résolution de 0.1 dB à 0.2 dB. Soit un passage de la variable de u6 à u5 (32 pas).

Voici un résumé de la proposition :

| | | | |
|---|---|---|---|
| **Rx** | BoardGain_GSM900 | u4 (16) |
| | BoardGain_DCS1800 | u4 |
| | BoardGain_PCS1900 | u4 |
| | BoardGain_GSM850 | u4 |
| **AFC** | RoughDacValue | u6 (64) |
| | AfcStepValue | - |
| **Tx** | N_PCLmax_GSM900 | u5 (32) |
| | N_PCLmax _DCS1800 | u5 |
| | N_PCLmax _PCS1900 | u5 |
| | N _PCLmax_GSM850 | u5 |
| | Poff_GSM900 | u5 (32) |
| | M_GSM900 | u3 (8) |
| | Nmin_GSM900 | u5 (32) |
| | Poff_DCS_1800 | u5 (32) |
| | M_DCS_1800 | u3 (8) |
| | Nmin DCS 1800 | u5 (32) |
| | | u5 (32) |
| | | u3 (8) |
| | Poff _PCS1900 | |
| | M_PCS 1900 | |
| | Nmin_PCS_1900 | u5 (32) |
| | Poff_GSM850 | u5 (32) |
| | M_GSM850 | u3 (8) |
| | Nmin_GSM850 | u5 (32) |

La somme des erreurs engendrées par cette proposition est de 0.6 dB, ce qui, ajouté à une erreur initiale d'algo de calibration de ± 0.4 dB, donne une erreur cumulée de ± 1 dB.

Le nombre de bits nécessaires pour stocker cette calibration serait alors de 94.

**Revendications**

1. Procédé de compression d'au moins un paramètre de calibrage d'un module électronique de radiocommunication permettant d'exécuter au moins un programme de radiocommunication stocké dans une première mémoire non volatile, ledit module étant initialisé avec une valeur de chaque paramètre de calibrage, ladite valeur de chaque paramètre de calibrage étant comprise dans une plage initiale de valeurs possibles, **caractérisé en ce que** ledit procédé comprend les étapes suivantes, pour au moins un paramètre de calibrage :

   - obtention (E22), pour ledit paramètre, d'une plage de valeurs utiles, de taille inférieure à ladite plage initiale, les limites de la plage de valeurs utiles sont choisies de façon à englober la totalité des valeurs du paramètre qu'il est réellement possible de rencontrer en production ;
   - obtention (E23), pour ledit paramètre, d'une valeur maximale prédéfinie d'erreur sur ledit paramètre de façon à conserver un fonctionnement du module de radiocommunication conforme à un cahier des charges prédéterminé ;
   - discrétisation de ladite plage de valeurs utiles, lors de la compression dudit paramètre, de façon à obtenir (E24) une valeur discrète dudit paramètre ;
   - compression (E25) de ladite valeur discrète en fonction de ladite valeur discrète, ladite plage de valeurs utiles dudit paramètre et ladite valeur maximale prédéfinie d'erreur de façon à obtenir une valeur compressée.

2. Procédé de compression selon la revendication 1, **caractérisé en ce qu'**il comprend une étape préalable de sélection (E21) d'au moins un paramètre de calibrage, en fonction d'au moins un critère de dispersion.

3. Procédé de compression selon l'une quelconque des revendications 1 et 2, **caractérisé en ce que** ladite étape de compression met en oeuvre une compression telle que, pour un paramètre de calibrage donné, la valeur compressée dudit paramètre donné est définie par :

$$\text{Valeur compressée} = E((\text{Valeur initiale - Offset})/\text{Granularité})$$

où

« Valeur compressée » désigne la valeur compressée dudit paramètre donné ;

« Valeur initiale » désigne la valeur discrète dudit paramètre donné ;

« Offset » correspond à une valeur de décalage définie selon une valeur et une plage typiques de dispersion connues en production ;

« Granularité » correspond à la taille du plus petit intervalle entre deux valeurs obtenues après décompression ; et

« E » désigne la notation de la fonction partie entière.

4. Procédé de décompression d'au moins un paramètre de calibrage d'un module électronique de radiocommunication permettant d'exécuter au moins un programme de radiocommunication stocké dans une première mémoire non volatile, ledit module étant initialisé avec une valeur de chaque paramètre de calibrage, ladite valeur de chaque paramètre de calibrage étant comprise dans une plage initiale de valeurs possibles, **caractérisé en ce que** ledit procédé comprend les étapes suivantes, pour au moins un paramètre de calibrage compressé :

   - obtention (E32) d'une valeur de décalage préalablement définie, lors de la compression dudit paramètre, en fonction d'une plage de valeurs utiles, de taille inférieure à ladite plage initiale, les limites de la plage de valeurs utiles sont choisies de façon à englober la totalité des valeurs du paramètre qu'il est réellement possible de rencontrer en production ;
   - obtention (E33) d'une valeur de granularité, préalablement définie lors de la compression dudit paramètre, en fonction d'une valeur maximale prédéfinie d'erreur sur ledit paramètre ;
   - décompression (E34) de la valeur compressée dudit paramètre en fonction de ladite valeur compressée, ladite valeur de décalage et ladite valeur de granularité, de façon à obtenir une valeur décompressée.

5. Procédé de décompression selon la revendication 4, **caractérisé en ce que** ladite étape de décompression met en oeuvre une décompression telle que, pour un paramètre de calibrage donné, la valeur décompressée dudit paramètre donné est définie par :

Valeur décompressée = Offset + (Granularité * valeur compressée) où

« Valeur décompressée » désigne la valeur décompressée dudit paramètre donné ;

« Valeur compressée » désigne la valeur compressée dudit paramètre donné ;

« Offset » correspond à une valeur de décalage définie selon une valeur et une plage typiques de dispersion connues en production ; et

« Granularité » correspond à la taille du plus petit intervalle entre deux valeurs obtenues après décompression.

6. Procédé d'initialisation d'un module électronique de radiocommunication permettant d'exécuter au moins un programme de radiocommunication, stocké dans une première mémoire non volatile, ladite initialisation étant basée sur des valeurs de paramètres de calibrage, **caractérisé en ce que** ledit procédé comprend les étapes suivantes, effectuées par ledit module quand il exécute ledit au moins un programme :

- lecture (E11), dans une deuxième mémoire non volatile, d'au moins un paramètre de calibrage compressé, suivant un procédé de compression selon l'une au moins des revendications 1 à 3 ;
- décompression (E12), suivant un procédé de décompression selon l'une au moins des revendications 4 et 5, de chaque paramètre de calibrage compressé lu, de façon à obtenir un paramètre de calibrage décompressé ; et
- initialisation (E14) dudit module basée sur les valeurs desdits paramètres de calibrage décompressés.

7. Procédé d'initialisation selon la revendication 6, **caractérisé en ce que** ladite première mémoire non volatile est externe audit module.

8. Procédé d'initialisation selon l'une quelconque des revendications 6 et 7, **caractérisé en ce que** ledit module effectue une étape de stockage (E13) desdits paramètres de calibrage décompressés dans une troisième mémoire volatile.

9. Procédé d'initialisation selon la revendication 8, **caractérisé en ce que** ladite troisième mémoire volatile est externe audit module.

10. Procédé d'initialisation selon l'une quelconque des revendications 6 à 9, **caractérisé en ce que** le module effectue ladite étape de lecture, en lisant lesdits paramètres de calibrage compressé dans une mémoire non volatile interne audit module et formant ladite deuxième mémoire.

11. Procédé d'initialisation selon l'une quelconque des revendications 6 à 10, **caractérisé en ce que** lesdits paramètres de calibrage comprennent au moins un paramètre relatif à un amplificateur de puissance compris dans ledit module, et appartenant au groupe comprenant :

- des paramètres de réception ;
- des paramètres de transmission ;
- des paramètres de fréquence.

12. Produit programme d'ordinateur, téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'initialisation selon l'une au moins des revendications 6 à 11 et/ou du procédé de compression selon l'une au moins des revendications 1 à 3 et/ou du procédé de décompression selon l'une au moins des revendications 4 et 5, lorsque ledit programme est exécuté sur un ordinateur.

13. Moyen de stockage, éventuellement totalement ou partiellement amovible, lisible par un ordinateur, stockant un jeu d'instructions exécutables par ledit ordinateur pour mettre en oeuvre le procédé d'initialisation selon l'une au moins des revendications 6 à 11 et/ou le procédé de compression selon l'une au moins des revendications 1 à 3 et/ou le procédé de décompression selon l'une au moins des revendications 4 et 5.

**Claims**

1. Method for compression of at least one calibration parameter of an electronic radiocommunication module enabling at least one radiocommunication program stored in a first non-volatile memory to be executed, said module being initialised with a value of each calibration parameter, said value of each calibration parameter being included within an initial range of possible values,
**characterised in that** said method comprises the following steps, for at least one calibration parameter:

   - obtaining (E22), for said parameter, a range of useful values, having a size smaller than said initial range, the limits of the range of useful values being chosen so as to encompass the totality of the values of the parameter that it is actually possible to encounter in production;
   - obtaining (E23), for said parameter, a predefined maximum error value in respect of said parameter so as to preserve operation of the radiocommunication module in conformity with predetermined specifications;
   - discretisation of said range of useful values at the time of compression of said parameter so as to obtain (E24) a discrete value of said parameter;
   - compression (E25) of said discrete value as a function of said discrete value, said range of useful values of said parameter and said predefined maximum error value, so as to obtain a compressed value.

2. Compression method according to Claim 1, **characterised in that** the method includes a preliminary step of selection (E21) of at least one calibration parameter as a function of at least one dispersion criterion.

3. Compression method according to either of Claims 1 and 2, **characterised in that** said compression step implements a compression such that, for a given calibration parameter, the compressed value of said given parameter is defined by:

   Compressed value = E((Initial value - Offset)/Granularity)
   where
   "Compressed value" designates the compressed value of said given parameter;
   "Initial value" designates the discrete value of said given parameter;
   "Offset" corresponds to an offset value defined in accordance with a typical value and a typical range of dispersion which are known in production;
   "Granularity" corresponds to the size of the smallest interval between two values obtained after decompression; and
   "E" designates the notation of the integer-part function.

4. Method for decompression of at least one calibration parameter of an electronic radiocommunication module enabling at least one radiocommunication program stored in a first non-volatile memory to be executed, said module being initialised with a value of each calibration parameter, said value of each calibration parameter being included within an initial range of possible values,
**characterised in that** said method comprises the following steps, for at least one compressed calibration parameter:

   - obtaining (E32) an offset value defined beforehand, at the time of compression of said parameter, as a function of a range of useful values, having a size smaller than said initial range, the limits of the range of useful values being chosen so as to encompass the totality of the values of the parameter that it is actually possible to encounter in production;
   - obtaining (E33) a granularity value defined beforehand, at the time of compression of said parameter, as a function of a predefined maximum error value in respect of said parameter;
   - decompression (E34) of the compressed value of said parameter as a function of said compressed value, said offset value and said granularity value, so as to obtain a decompressed value.

5. Decompression method according to Claim 4, **characterised in that** said decompression step implements a decompression such that, for a given calibration parameter, the decompressed value of said given parameter is defined by:

   Decompressed value = Offset+(Granularity*Compressed value)
   where
   "Decompressed value" designates the decompressed value of said given parameter;
   "Compressed value" designates the compressed value of said given parameter;

"Offset" corresponds to an offset value defined in accordance with a typical value and a typical range of dispersion which are known in production; and

"Granularity" corresponds to the size of the smallest interval between two values obtained after decompression.

6. Method for initialisation of an electronic radiocommunication module enabling at least one radiocommunication program stored in a first non-volatile memory to be executed, said initialisation being based on values of calibration parameters, **characterised in that** said method comprises the following steps, carried out by said module when it executes said at least one program:

- reading (E11), in a second non-volatile memory, of at least one calibration parameter compressed in accordance with a compression method according to at least one of Claims 1 to 3;
- decompression (E12), in accordance with a decompression method according to at least one of Claims 4 and 5, of each compressed calibration parameter that has been read, so as to obtain a decompressed calibration parameter; and
- initialisation (E14) of said module, based on the values of said decompressed calibration parameters.

7. Initialisation method according to Claim 6, **characterised in that** said first non-volatile memory is external to said module.

8. Initialisation method according to either of Claims 6 and 7, **characterised in that** said module carries out a step of storage (E13) of said decompressed calibration parameters in a third, volatile memory.

9. Initialisation method according to Claim 8, **characterised in that** said third, volatile memory is external to said module.

10. Initialisation method according to any one of Claims 6 to 9, **characterised in that** the module carries out said reading step by reading said compressed calibration parameters in a non-volatile memory internal to said module and forming said second memory.

11. Initialisation method according to any one of Claims 6 to 10, **characterised in that** said calibration parameters include at least one parameter relating to a power amplifier included in said module and belonging to the group comprising:

- reception parameters;
- transmission parameters;
- frequency parameters.

12. Computer-program product, downloadable from a communications network and/or recorded on a computer-readable medium and/or capable of being executed by a processor, **characterised in that** it comprises program-code instructions for the implementation of the initialisation method according to at least one of Claims 6 to 11 and/or of the compression method according to at least one of Claims 1 to 3 and/or of the decompression method according to at least one of Claims 4 and 5 when said program is executed on a computer.

13. Computer-readable storage means, possibly totally or partially removable, storing a set of instructions that are capable of being executed by said computer in order to implement the initialisation method according to at least one of Claims 6 to 11 and/or the compression method according to at least one of Claims 1 to 3 and/or the decompression method according to at least one of Claims 4 and 5.

**Patentansprüche**

1. Verfahren zum Komprimieren wenigstens eines Kalibrierungsparameters eines elektronischen Funkkommunikationsmoduls, das ein Ausführen wenigstens eines Funkkommunikationsprogramms ermöglicht, das auf einem ersten nicht flüchtigen Speicher gespeichert ist, wobei das Modul mit einem Wert jedes der Kalibrierungsparameter initialisiert ist und wobei der Wert jedes der Kalibrierungsparameter in einem Anfangsbereich möglicher Werte enthalten ist,

**gekennzeichnet dadurch, dass** das Verfahren für wenigstens einen Kalibrierungsparameter die folgenden Schritte umfasst:

- Erhalten (E22) eines Bereichs nützlicher Werte für den Parameter, der von geringerer Größe als der Anfangsbereich ist, wobei die Grenzen des Bereichs nützlicher Werte derart gewählt werden, dass die Gesamtheit der Werte des Parameters, die in Produktion tatsächlich möglich sind anzutreffen, eingeschlossen ist;

- Erhalten (E23), für den Parameter, eines vordefinierten maximalen Fehlerwertes auf den Parameter, derart, dass ein mit dem vorbestimmten Lastenverzeichnis konformes Funktionieren des Funkkommunikationsmoduls beibehalten wird;

- Diskretisieren des Bereichs nützlicher Werte, anlässlich des Komprimierens des Parameters, derart, dass ein diskreter Wert des Parameters erhalten (E24) wird;

- Komprimieren (E25) des diskreten Wertes als Funktion des diskreten Wertes, des Bereichs nützlicher Werte des Parameters und des maximalen vordefinierten Fehlerwertes, derart, dass ein komprimierter Wert erhalten wird.

2. Verfahren zum Komprimieren nach Anspruch 1, **dadurch gekennzeichnet, dass** es vorher einen Schritt des Selektierens (E21) wenigstens eines Kalibrierungsparameters als Funktion wenigstens eines Dispersionskriteriums umfasst.

3. Verfahren zum Komprimieren nach einem der Ansprüche 1 und 2, **dadurch gekennzeichnet, dass** der Schritt des Komprimierens ein Komprimieren derartig umsetzt, dass, für einen gegebenen Kalibrierungsparameter, der komprimierte Wert des gegebenen Parameters definiert ist durch:

Komprimierter Wert = E((Initialwert - Offset)/Körnung) wo
"Komprimierter Wert" den komprimierten Wert des gegebenen Parameters bezeichnet;
"Initialwert" den diskreten Wert des gegebenen Parameters bezeichnet; "Offset" einem Verschiebungswert entspricht, der gemäß einem Wert und einem Bereich in Produktion bekannter typischer Dispersion definiert ist; "Körnung" der Größe des kleinsten Intervalls zwischen zwei nach dem Dekomprimieren erhaltener Werte entspricht; und
"E" die Notation der Integerfunktion bezeichnet.

4. Verfahren zum Dekomprimieren wenigstens eines Kalibrierungsparameters eines elektronischen Funkkommunikationsmoduls, das ein Ausführen wenigstens eines Funkkommunikationsprogramms ermöglicht, das auf einem ersten nicht flüchtigen Speicher gespeichert ist, wobei das Modul mit einem Wert jedes Kalibrierungsparameters initialisiert ist und wobei der Wert jedes der Kalibrierungsparameter in einem Anfangsbereich möglicher Werte enthalten ist, **gekennzeichnet dadurch, dass** das Verfahren für wenigstens einen der komprimierten Kalibrierungsparameter die folgenden Schritte umfasst:

- Erhalten (E32) eines vorher anlässlich des Komprimierens des Parameters definierten Verschiebungswertes als Funktion eines Bereichs nützlicher Werte, der von geringerer Größe als der Anfangsbereich ist, wobei die Grenzen des Bereichs nützlicher Werte derart gewählt werden, dass die Gesamtheit der Werte des Parameters, die in Produktion tatsächlich möglich sind anzutreffen, eingeschlossen ist;

- Erhalten (E33) eines vorher anlässlich des Komprimierens des Parameters definierten Körnungswertes als Funktion eines vordefinierten maximalen Fehlerwertes auf den Parameter;

- Dekomprimieren (E34) des komprimierten Wertes des Parameters als Funktion des komprimierten Wertes, des Verschiebungswertes und des Körnungswertes, derart, dass ein dekomprimierter Wert erhalten wird.

5. Verfahren zum Dekomprimieren nach Anspruch 4, **dadurch gekennzeichnet, dass** der Schritt des Dekomprimierens ein Dekomprimieren derartig umsetzt, dass, für einen gegebenen Kalibrierungsparameter, der dekomprimierte Wert des gegebenen Parameters definiert ist durch:

Dekomprimierter Wert = Offset + (Körnung * Komprimierter Wert) wo
"Dekomprimierter Wert" den dekomprimierten Wert des gegebenen Parameters bezeichnet;
"Komprimierter Wert" den komprimierten Wert des gegebenen Parameters bezeichnet;
"Offset" einem Verschiebungswert entspricht, der gemäß einem Wert und einem Bereich in Produktion bekannter typischer Dispersion definiert ist; und "Körnung" der Größe des kleinsten Intervalls zwischen zwei nach dem Dekomprimieren erhaltener Werte entspricht.

6. Verfahren zum Initialisieren eines elektronischen Funkkommunikationsmoduls, das ein Ausführen wenigstens eines Funkkommunikationsprogramms ermöglicht, das auf einem ersten nicht flüchtigen Speicher gespeichert ist, wobei die Initialisierung auf den Werten der Kalibrierungsparameter basiert,

**dadurch gekennzeichnet, dass** das Verfahren die folgenden Schritte umfasst, die durch das Modul, wenn es das wenigstens eine Programm ausführt, durchgeführt werden:

- Lesen (E11) wenigstens eines nach einem Verfahren zum Komprimieren gemäß wenigstens einem der Ansprüche 1 bis 3 komprimierten Kalibrierungsparameters auf einem zweiten nicht flüchtigen Speicher;
- Dekomprimieren (E12) jedes der gelesenen komprimierten Kalibrierungsparameter nach einem Verfahren zum Dekomprimieren gemäß wenigstens einem der Ansprüche 4 und 5, derart, dass ein dekomprimierter Kalibrierungsparameter erhalten wird; und
- Initialisieren (E14) des Moduls basierend auf den Werten der dekomprimieren Kalibrierungsparameter.

7. Verfahren zum Initialisieren gemäß Anspruch 6, **dadurch gekennzeichnet, dass** der erste nicht flüchtige Speicher außerhalb des Moduls ist.

8. Verfahren zum Initialisieren nach einem der Ansprüche 6 und 7, **dadurch gekennzeichnet, dass** das Modul einen Schritt des Speicherns (E13) der dekomprimierten Kalibrierungsparameter auf einem dritten flüchtigen Speicher durchführt.

9. Verfahren zum Initialisieren gemäß Anspruch 8, **dadurch gekennzeichnet, dass** der dritte flüchtige Speicher außerhalb des Moduls ist.

10. Verfahren zum Initialisieren gemäß einem der Ansprüche 6 bis 9, **dadurch gekennzeichnet, dass** das Modul den Schritt des Lesens durchführt, indem es die komprimieren Kalibrierungsparameter in einen nicht flüchtigen Speicher liest, der innerhalb des Moduls ist und den zweiten Speicher bildet.

11. Verfahren zum Initialisieren nach einem der Ansprüche 6 bis 10, **dadurch gekennzeichnet, dass** die Kalibrierungsparameter wenigstens einen Parameter bezüglich eines in dem Modul enthaltenen Leistungsverstärkers umfassen und zur Gruppe gehören umfassend:

- Empfangsparameter;
- Übertragungsparameter;
- Frequenzparameter.

12. Computerprogrammprodukt, von einem Kommunikationsnetz herunterladbar und/oder auf einem computerlesbaren Träger gespeichert und/oder durch einen Prozessor ausführbar, **dadurch gekennzeichnet, dass** es Programmcodeinstruktionen zur Umsetzung des Verfahrens zum Initialisieren gemäß wenigstens einem der Ansprüche 6 bis 11 und/oder des Verfahrens zum Komprimieren gemäß wenigstens einem der Ansprüche 1 bis 3 und/oder des Verfahrens zum Dekomprimieren gemäß wenigstens einem der Ansprüche 4 und 5 umfasst, wenn das Programm auf einem Computer ausgeführt wird.

13. Speichermittel, möglicherweise vollständig oder teilweise entfernbar, computerlesbar, einen Befehlssatz von durch den Computer ausführbaren Instruktionen speichernd, um das Verfahren zum Initialisieren gemäß wenigstens einem der Ansprüche 6 bis 11 und/oder das Verfahren zum Komprimieren gemäß wenigstens einem der Ansprüche 1 bis 3 und/oder das Verfahren zum Dekomprimieren gemäß wenigstens einem der Ansprüche 4 und 5 umzusetzen.

E11

E12

E13

E14

Fig. 1

E21

E22

E23

E24

E25

Fig. 2

Nb de
pièces

Plage de codage
initiale

100 valeurs de 0 à 99.

Valeur
constatée

0
Valeur Min

Valeur du paramètre

100
Valeur Max

Fig. 4a

Nb de
pièces

Nouvelle
plage de
codage

50 valeurs de 20 à 69

Valeur
constatée

0    20
Valeur Min

Valeur du paramètre

70    100
Valeur Max

Fig. 4b

Nb de
pièces

25 valeurs de 20 à 68 (pas = 2)

Valeur
constatée

0    20
Valeur Min

Valeur du paramètre

70    100
Valeur Max

Fig. 4c

Fig. 5 (art antérieur)

Fig. 6

370

300      320        330

340

310      μp

350

360

Fig. 7

E31

E32

E33

E34

Fig. 3

TAB 1

| Paramètres RF | | Valeur Entrée | Paramètres de Compression | | Taille Finale (bits) | Plage D'entrée | Valeur Compressée |
|---|---|---|---|---|---|---|---|
| | | | Offset | Granularité | | | |
| Rx | BoardGain_GSM900 | 93 | 88 | 1 | 4 | 88-103 | 5 |
| | BoardGain_DCS1800 | 93 | 88 | 1 | 4 | 88-103 | 5 |
| | BoardGain_PCS1900 | 93 | 88 | 1 | 4 | 88-103 | 5 |
| | BoardGain_GSM850 | 95 | 88 | 1 | 4 | 88-103 | 7 |
| AFC | RoughDacValue | 59 | 26 | 1 | 6 | 26-89 | 33 |
| Tx | N_PCLmax_GSM900 | 909 | 650 | 10 | 5 | 650-960 | 25 |
| | N_PCLmax_DCS1800 | 888 | 650 | 10 | 5 | 650-960 | 23 |
| | N_PCLmax_PCS1900 | 910 | 650 | 10 | 5 | 650-960 | 26 |
| | N_PCLmax_GSM850 | 901 | 650 | 10 | 5 | 650-960 | 25 |
| | Poff_GSM900 | 32 | 27.3 | 0.2 | 5 | 27.3-33.5 | 23 |
| | M_GSM900 | 35 | 31.5 | 1 | 3 | 31.5-38.5 | 3 |
| | Nmin_GSM900 | 77 | 30 | 3 | 5 | 30-123 | 15 |
| | Poff_DCS1800 | 28.11 | 24.6 | 0.2 | 5 | 24.6-30.8 | 17 |
| | M_DCS 1800 | 32.01 | 28.5 | 1 | 3 | 28.5-35.5 | 3 |
| | Nmin_DCS 1800 | 68 | 19 | 3 | 5 | 19-112 | 16 |
| | Poff_PCS1900 | 28.04 | 23.5 | 0.2 | 5 | 23.5-29.7 | 22 |
| | M_PCS 1900 | 33.74 | 30 | 1 | 3 | 30-37 | 3 |
| | Nmin_PCS 1900 | 58 | 10 | 3 | 5 | 10-103 | 16 |
| | Poff_GSM850 | 31.7 | 27.5 | 0.2 | 5 | 27.5-33.7 | 20 |
| | M_GSM850 | 33.9 | 29 | 1 | 3 | 29-36 | 4 |
| | Nmin_GSM850 | 84 | 43 | 3 | 5 | 43-136 | 13 |
| | | | | | Total | 94 | | |

C81    C82    C83    C84   C85    C86    C87    C88

**Résultat Compressé sur 94 bits**

0101010101010111100001110011011111101011001101110110111111000101110000101100111000010100100001101

SEQ 1

Fig. 8

26

SEQ 1

0101010101010111100001110011011111101011001101110110111110001011100001011001110000101001000110̄1

**Paramètres RF**

| Paramètres RF | | Valeur Compressée | Paramètres de compression | | Valeur décompressée |
|---|---|---|---|---|---|
| | | | Offset | Granularité | |
| Rx | BoardGain_GSM900 | 5 | 88 | 1 | 93 |
| | BoardGain_DCS1800 | 5 | 88 | 1 | 93 |
| | BoardGain_PCS1900 | 5 | 88 | 1 | 93 |
| | BoardGain_GSM850 | 7 | 88 | 1 | 95 |
| AFC | RoughDacValue | 33 | 26 | 1 | 59 |
| Tx | N_PCLmax_GSM900 | 25 | 650 | 10 | 900 |
| | N_PCLmax_DCS1800 | 23 | 650 | 10 | 880 |
| | N_PCLmax_PCS1900 | 26 | 650 | 10 | 910 |
| | N_PCLmax_GSM850 | 25 | 650 | 10 | 900 |
| | Poff_GSM900 | 23 | 27.3 | 0.2 | 31.9 |
| | M_GSM900 | 3 | 31.5 | 1 | 34.5 |
| | Nmin_GSM900 | 15 | 30 | 3 | 75 |
| | Poff_DCS1800 | 17 | 24.6 | 0.2 | 28 |
| | M_DCS 1800 | 3 | 28.5 | 1 | 31.5 |
| | Nmin_DCS 1800 | 16 | 19 | 3 | 67 |
| | Poff_PCS1900 | 22 | 23.5 | 0.2 | 27.9 |
| | M_PCS 1900 | 3 | 30 | 1 | 33 |
| | Nmin_PCS 1900 | 16 | 10 | 3 | 58 |
| | Poff_GSM850 | 20 | 27.5 | 0.2 | 31.5 |
| | M GSM850 | 4 | 29 | 1 | 33 |

C91  C92  C93  C94  C95  C96

TAB 2

## Fig. 9